# FASCICULE DE BREVET EUROPEEN

(11) **EP 2 891 371 B1**
(45) Date de publication et mention de la délivrance du brevet: **19.09.2018**
(21) Numéro de dépôt: 13756448.0
(22) Date de dépôt: 29.08.2013
(51) Int. Cl.: H04W 52/02, H04W 88/08

(54) **PROCEDE DE GESTION D'UN POINT D'ACCES D'UN RESEAU DE COMMUNICATION EN FONCTION DU TRAFIC**
VERFAHREN ZUR VERWALTUNG EINES ZUGANGSPUNKTS EINES KOMMUNIKATIONSNETZES ENTSPRECHEND DEM VERKEHR
METHOD FOR MANAGING AN ACCESS POINT OF A COMMUNICATION NETWORK ACCORDING TO THE TRAFFIC

(30) Priorité: 30.08.2012 FR 1258121
(43) Date de publication de la demande: 08.07.2015
(73) Titulaire: Commissariat à l'Énergie Atomique et aux Énergies Alternatives, 75015 Paris (FR)
(72) Inventeur: CALVANESE STRINATI, Emilio, F-38000 Grenoble (FR); GUPTA, Rohit, 01099 Dresden (DE)
(74) Mandataire: Regimbeau
(86) Numéro de dépôt international: PCT/EP2013/067924
(87) Numéro de publication internationale: WO 2014/033224

(56) Documents cités:
- US-A1- 2004 264 396
- M. Tseng: "Dynamic RAN Power Management", , 9 août 2012 (2012-08-09), XP002690588, Extrait de l'Internet: URL:http://www.3gpp2.org/public_html/specs /S.R0148-0_v1%200_DRPM%20%28ES-mode%29%20S tage%201-20120815.pdf [extrait le 2013-01-18]

## Description

### DOMAINE TECHNIQUE GENERAL

L'invention concerne le domaine des réseaux de communications et concerne plus particulièrement la gestion d'un point d'accès d'un réseau de communication.

### ETAT DE LA TECHNIQUE

Avec l'émergence de téléphones intelligents (en anglais, « *smartphone* ») et l'arrivée de nouvelles applications consommatrices de trafic de données, les opérateurs de réseau de téléphonie mobile doivent faire face à une montée exponentielle du trafic de données.

Une solution pour pallier ce problème est de densifier le réseau en déployant un nombre de plus en plus croissant de points d'accès, un point d'accès couvrant une zone géographique dans laquelle un terminal de communication peut se connecter pour accéder à un service.

Une autre solution est d'augmenter les débits des points d'accès.

Un problème est que les réseaux déployés ainsi que les terminaux consomment de plus en plus d'énergie ce qui réduit l'efficacité énergétique du réseau.

Afin de d'augmenter l'efficacité énergétique du réseau on connait des solutions permettant d'activer et de désactiver les points d'accès du réseau. On précise qu'un point d'accès est
- actif lorsqu'il est sous tension et transmet des paquets de données et fonctionne à une puissance dépendant de la charge de trafic à transmettre,
- en veille lorsqu'il est sous tension et ne transmet pas de paquet de données et fonctionne à une puissance Pᵥₑᵢₗₗₑ ;
- inactif lorsqu'il n'est pas sous tension et fonctionne à une puissance nulle.

Une solution est, lorsque du trafic arrive à un point d'accès, en veille ou inactif et si ce trafic est faible, de transférer ce trafic vers un point d'accès voisin couvrant le terminal de communication destinataire du trafic, le point d'accès initial restant alors inactif ou en veille. Les documents E. Oh and B. Krishnamachari, "Energy savings through dynamic base station switching in cellular wireless access networks," in GLOBECOM 2010, 2010 IEEE Global Telecommunications Conference, décembre 2010, pages 1-5, M. Marsan, L. Chiaraviglio, D. Ciullo, and M. Meo, "Optimal energy savings in cellular access networks," in Communications Workshops, 2009. ICC Workshops 2009. IEEE International Conférence on, juin 2009, pages 1-5, E. Oh, B. Krishnamachari, X. Liu, and Z. Niu, "Toward dynamic energy efficient operation of cellular network infrastructure," Communications Magazine, IEEE, vol. 49, no. 6, pp. 56 -61, juin 2011 décrivent une telle solution.

Une autre solution est de rendre inactif un point d'accès lorsqu'il n'a pas de trafic à transmettre, cette solution est plus connue sous le nom de transmission discontinue (en anglais, « *Discontinuous Transmission* », (DTX)). Les documents L. Saker, S.-E. Elayoubi, and T. Chahed, "Minimizing energy consumption via sleep mode in green base station," in Wireless Communications and Networking Conférence (WCNC), 2010 IEEE, avril 2010, pages 1-6, L. Saker and S. Elayoubi, "Sleep mode implementation issues in green base stations," in Personal Indoor and Mobile Radio Communications (PIMRC), 2010 IEEE 21st International Symposium on, sept. 2010, pages1683 -1688 et I. Godor et al., "Most promising tracks of green network technologies," EARTH D3.1, Tech. Rep., 2010 décrivent une telle solution.

Par ailleurs, le document US2004/264396 A1 divulgue un procédé dans lequel des paquets de données à destination d'au moins un terminal ont une priorité. Les paquets ayant une priorité haute sont immédiatement transmis tandis que les autres sont mis en file d'attente dans un tampon (buffer). Une fois mis dans le tampon, un compteur est déclenché au premier paquet mis dans le tampon. Les paquets mis dans la file d'attente sont transmis si le tampon est plein ou si le compteur atteint un seuil prédéterminé à l'avance. Tous les paquets du tampon sont alors transmis.

Ainsi, il existe un besoin pour augmenter l'efficacité énergétique d'un réseau de communications compte tenu de l'augmentation du trafic.

### PRESENTATION DE L'INVENTION

L'invention répond à ce besoin et propose à cet effet selon un premier aspect un procédé de gestion d'un point d'accès d'un réseau de communication, le point d'accès étant adapté pour délivrer des paquets de données, à au moins un terminal de communication connecté audit point d'accès, le procédé comprenant les étapes suivantes, le point d'accès étant inactif ou en veille :
mise en file d'attente de plusieurs paquets de données, un paquet de données ayant un temps d'attente d à l'issu duquel il est considéré comme perdu ;
détermination pour chaque valeur de temps d'attente d, du temps de transmission des paquets de données ayant un temps d'attente d ; et si, pour un temps d'attente d, un temps de transmission T_{d} correspondant est supérieur audit temps d'attente d correspondant, la durée d-Td étant négative, le procédé comprenant une étape d'activation dudit point d'accès afin de transmettre des paquets de la file d'attente, les paquets transmis étant de préférence ceux présentant un temps d'attente faible.

L'invention est avantageusement complétée par les caractéristiques suivantes, prises seules ou en une quelconque de leur combinaison techniquement possible :
- le point d'accès est adapté pour transmettre au moins un paquet de données pendant un intervalle de transmission, les temps de transmission Td correspondant à nombre entier d'intervalle de transmission pour transmettre les paquets ayant un temps d'attente d ;
- chaque intervalle de transmission on peut transmettre sur plusieurs fréquences les paquets de données.
- le temps de transmission Td est fonction de la durée nécessaire pour activer le point d'accès.
- le temps de transmission Td est fonction de la qualité de la liaison radio entre un terminal de communication et le point d'accès.

L'invention concerne selon un second aspect, un point d'accès d'un réseau de communication adapté pour délivrer des paquets de données, au moins un terminal de communication connecté audit point d'accès, le point d'accès étant en outre adapté pour mettre en oeuvre un procédé selon l'une des revendications précédentes.

L'invention concerne selon un troisième aspect, un réseau de communication comprenant au moins un point d'accès selon le second aspect de l'invention. De manière avantageuse, le point d'accès est celui d'un réseau 3GPP du type Edge, 3G, 3G+, 4G, LTE ou d'un réseau non 3GPP, du type Wi-Fi, Wimax.

Et l'invention concerne selon un quatrième aspect, un produit programme d'ordinateur comprenant des instructions de code pour l'exécution d'un procédé selon le premier aspect de l'invention, lorsque celui-ci est exécuté par un processeur.

L'invention permet d'améliorer l'efficacité énergétique d'un point d'accès et par conséquent celle du réseau comprenant plusieurs points d'accès en exploitant le fait que des paquets de données peuvent attendre avant d'être acheminés vers les terminaux. En particulier, les durées pendant lesquelles un point d'accès est inactif sont plus longues que celles obtenues par les procédés de type connu.

L'invention s'applique aux points d'accès des réseaux 3GPP du type Edge, 3G, 3G+, 4G, LTE ou des réseaux non 3GPP, du type Wi-Fi, Wimax.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 illustre un réseau de communication conforme à l'invention ;
- la figure 2 illustre un déploiement de deux points d'accès dans un réseau de communication conforme à l'invention ;
- la figure 3 illustre l'architecture d'un point d'accès conforme à l'invention ;
- la figure 4 illustre des étapes d'un procédé de gestion d'un point d'accès conforme à l'invention.

### DESCRIPTION DETAILLEE DE L'INVENTION

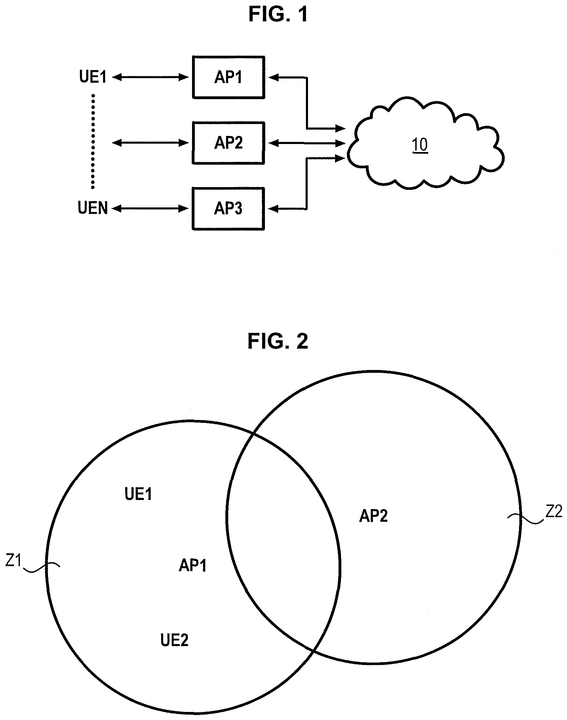

En relation avec la **figure 1****,** un réseau de communication conforme à l'invention est illustré.

Le réseau comprend plusieurs points d'accès APi permettant d'accéder à des réseaux d'accès 10 et au moins un terminal mobile UE. Un réseau d'accès permet au terminal mobile UE d'accéder soit à un service de téléphonie soit à un service de données (par exemple Internet). Le réseau d'accès est soit 3GPP (par exemple, Edge, 3G, 3G+, 4G, LTE) soit non 3GPP (par exemple Wi-Fi, Wimax).

En relation avec la **figure 2****,** un point d'accès APi (i=1, 2) définit une zone de couverture Zi (i=1, 2) dans laquelle sont localisés deux terminaux mobiles UE1, UE2. Ces points d'accès sont soit des points d'accès 3GPP, soit des points d'accès non 3GPP. Dans le cas d'un réseau d'accès 4G, les points d'accès sont des équipements appelés « eNodeB ». Dans le cas d'un réseau d'accès 3G, les points d'accès sont des « NodeB ». Dans le cas d'un réseau d'accès 2G ou GPRS, les points d'accès sont des BTS (en anglais, « *Base Transceiver Station »).* Dans le cas d'un réseau d'accès WiFi, les points d'accès sont des « *hotspots ».* Enfin, dans le cas d'un réseau d'accès WIMAX, les points d'accès sont des stations de base.

Le point d'accès est adapté pour transmettre à un ou plusieurs terminaux, des paquets de données.

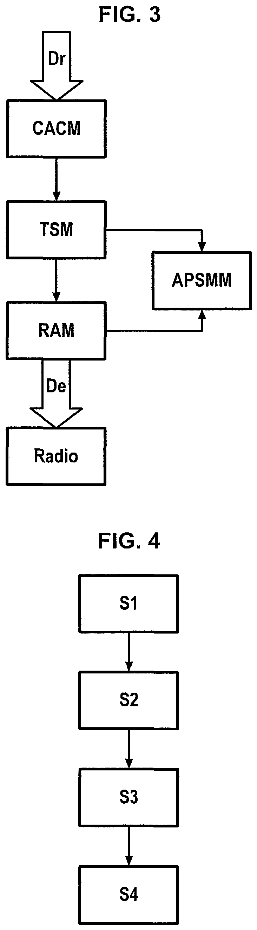

On se réfère maintenant à la **figure 3** qui illustre l'architecture d'un point d'accès comprenant un module de contrôle d'admission (en anglais, *« Call Admission Control Module* », (CACM)), un module de mise en forme du trafic (en anglais, « *Traffic Shaping Module* », (TSM)), un module de gestion de l'activation du point d'accès (en anglais *« Access Point Sleep Mode Manager »,* (APSMM)), un module d'allocation de ressources (en anglais, « *Resource Allocation Module »,* (RAM)) et un module radio pour transmettre les données.

Le module de contrôle d'admission CACM permet d'estimer les caractéristiques des paquets de données Dr arrivant au point d'accès (débit, temps d'attente, etc.).

Le module de mise en forme du trafic TSM permet de mettre en file d'attente les paquets de données et de transmettre les paquets de données au module d'allocation de ressources RAM qui prépare la transmission des paquets de données.

Le module d'allocation de ressources RAM permet de préparer la transmission en fonction de la liaison radio et de transmettre les paquets de données De ainsi préparés au module radio afin que ce dernier transmette les paquets de données.

Enfin le module de gestion de l'activation du point d'accès APSMM permet de gérer l'activation/désactivation du point d'accès au moyen d'un procédé de gestion décrit ci-après en déclenchant la préparation des paquets de données par le module d'allocation de ressources RAM.

En relation avec la **figure 4****,** on décrit un procédé de gestion d'un point d'accès d'un réseau de communication selon un mode de réalisation de la présente invention.

Des paquets de données Dr arrivent au point d'accès à destination d'un ou plusieurs terminaux présents dans la zone de couverture du point d'accès AP.

Les paquets de données ont un temps d'attente d à l'issu duquel ils sont considérés comme perdus (déterminé par le module de contrôle d'admission CACM).

On considère qu'un paquet de données ayant un temps d'attente d faible est un paquet prioritaire par rapport à un paquet de données ayant un temps d'attente d plus élevé.

Dans une étape S1, les paquets de données sont mis en file d'attente et sont de préférence classés en fonction de leur niveau de priorité c'est-à-dire en fonction de leur temps d'attente d.

Les paquets de données sont destinés à un ou plusieurs utilisateurs et on note que la mise en file d'attente et le classement sont indépendants de l'utilisateur.

Le procédé permet de gérer le point d'accès afin que ce dernier transmette les paquets de données dès lors qu'un paquet est urgent, c'est-à-dire qu'il ne peut plus attendre. Le procédé permet, outre le paquet urgent, de profiter qu'un paquet est urgent pour transmettre tous les paquets de la file d'attente dans la mesure où les ressources sont disponibles.

Afin de déterminer si le point d'accès doit être activé, dans une étape S2 on détermine pour chaque valeur de temps d'attente d, le temps de transmission T_{d} de l'ensemble des paquets de données ayant un temps d'attente d.

Ensuite, dans une étape S3, on compare chaque temps d'attente d au temps de transmission T_{d} correspondant et si, pour l'un des temps d'attente d, le temps de transmission T_{d} correspondant est supérieur au temps d'attente d, c'est-à-dire qu'une durée d-T_{d} est négative, dans une étape S4, on active le point d'accès afin de transmettre des paquets de la file d'attente.

On notera que ce procédé s'applique de la même façon que le point d'accès soit, au début du procédé, en veille ou inactif. Dans le cas où le point d'accès est inactif au début du procédé, les étapes S1 à S3 peuvent être délocalisées du point d'accès, par exemple dans un autre point d'accès en veille ou actif, ou être façon délocalisées et centralisées pour tous les points d'accès. Si le dispositif de comparaison des temps d'attente d aux temps de transmission T_{d} est délocalisé et que le point d'accès doit être activé, un signal d'activation du point d'accès peut être transmis au point d'accès à l'étape S4.

De manière avantageuse, le point d'accès transmet pendant un intervalle de transmission (en anglais, « *Transmission Time Interval* », (TTI)), intervalle pendant lequel il transmet un ou plusieurs paquets de données. Les paquets peuvent être éventuellement transmis sur plusieurs fréquences pendant un même intervalle de transmission, un paquet de données occupant une fréquence. On peut également prévoir une transmission multiporteuses, par exemple de type OFDMA (en anglais *« Orthogonal Frequency Division Multiple Access* »), les fréquences porteuses utilisées étant éventuellement regroupées en fragments (en anglais « *chunk* »)*,* chaque fragment comprenant un nombre N_{chunks} de porteuses inférieur au nombre de porteuses disponibles N dans le système de communication.

Dans ce cas, les temps de transmission T_{d} correspondent à un nombre entier d'intervalle de transmission TTI pour transmettre les paquets ayant un temps d'attente d.

Ainsi par exemple, si on a un paquet de données qui a un temps d'attente d=2ms, on considère que le temps de transmission T_{d=2} est égal à un intervalle de transmission. En d'autres termes on sait que l'on a besoin d'un intervalle de transmission dans 2ms pour transmettre un paquet de données.

A nouveau à titre d'exemple, si on a deux paquets de données qui ont un temps d'attente d=2ms et que l'on peut transmettre pendant un intervalle de transmission TTI deux paquets de données sur des fréquences différentes, on considère aussi que le temps de transmission T_{d=2} est égal à un intervalle de transmission.

De manière avantageuse, le temps de transmission T_{d} prend en compte la durée nécessaire pour activer le point d'accès (depuis un mode en veille ou inactif), des temps de retransmission dans le cas d'un protocole HARQ.

Encore de manière avantageuse, le temps de transmission T_{d} prend en compte la qualité de la liaison radio entre un terminal de communication et le point d'accès.

Ainsi, le temps de transmission T_{d} sera le temps maximal entre le temps de transmission pour transmettre les paquets de données ayant un temps d'attente d et le temps de transmission corrigé en fonction des caractéristiques de la liaison radio (qualité du canal de transmission, type de modulation utilisé, puissance disponible, etc.), de la durée nécessaire pour activer le point d'accès et des temps de retransmission.

L'invention n'est pas limitée au procédé décrit ci-dessus mais concerne également produit programme d'ordinateur comprenant des instructions de code pour l'exécution du procédé ci-dessus décrit, lorsque celui-ci est exécuté par un processeur.

## Revendications

1. Procédé de gestion d'un point d'accès d'un réseau de communication, le point d'accès étant adapté pour délivrer des paquets de données à au moins un terminal de communication (UE) connecté audit point d'accès (AP), le procédé comprenant les étapes suivantes :
mise en file d'attente (S1) de plusieurs paquets de données, un paquet de données ayant un temps d'attente d à l'issue duquel il est considéré comme perdu ;
détermination (S2) pour chaque valeur de temps d'attente d, du temps de transmission T_{d} des paquets de données ayant un temps d'attente d, ledit temps de transmission T_{d} étant fonction de la durée nécessaire pour activer le point d'accès depuis un mode inactif ou en veille ;
comparaison (S3), pour un temps d'attente d, d'un temps de transmission T_{d} correspondant avec ledit temps d'attente d,
les étapes précédentes (S1,S2,S3) étant réalisées par un dispositif délocalisé du point d'accès (AP) dans le cas où le point d'accès est dans le mode inactif,
le procédé comprenant, si la durée d-Td est négative, une étape d'activation (S4) dudit point d'accès depuis le mode inactif ou en veille afin de transmettre des paquets de la file d'attente, l'étape d'activation (S4) dudit point d'accès comprenant, dans le cas où le point d'accès est dans le mode inactif avant ladite étape d'activation, la transmission par le dispositif délocalisé d'un signal d'activation du point d'accès.

2. Procédé selon la revendication précédente, dans lequel le point d'accès est adapté pour transmettre au moins un paquet de données pendant un intervalle de transmission, TTI, les temps de transmission Td correspondant à nombre entier d'intervalle de transmission, TTI, pour transmettre les paquets ayant un temps d'attente d.

3. Procédé selon la revendication 2, dans lequel dans chaque intervalle de transmission on peut transmettre sur plusieurs fréquences les paquets de données.

4. Procédé selon l'une des revendications précédentes, dans lequel le temps de transmission Td est fonction de la qualité de la liaison radio entre un terminal de communication et le point d'accès.

5. Point d'accès d'un réseau de communication adapté pour délivrer des paquets de données à au moins un terminal de communication (UE) connecté audit point d'accès (AP), le point d'accès étant en outre adapté pour mettre en oeuvre un procédé selon l'une des revendications précédentes lorsque ledit point d'accès est dans le mode veille.

6. Réseau de communication comprenant au moins un point d'accès selon la revendication précédente et au moins un terminal de communication (UE) connecté audit point d'accès.

7. Réseau de communication selon la revendication précédente, dans lequel le point d'accès est celui d'un réseau 3GPP du type Edge, 3G, 3G+, 4G, LTE ou d'un réseau non 3GPP, du type Wi-Fi, Wimax.

8. Produit programme d'ordinateur comprenant des instructions de code pour l'exécution d'un procédé selon l'une des revendications 1 à 4, lorsque celui-ci est exécuté par un processeur.

## Patentansprüche

1. Verwaltungsverfahren eines Zugangspunktes eines Kommunikationsnetzes, wobei der Zugangspunkt geeignet ist, um Datenpakete an wenigstens ein Kommunikationsterminal (UE) zu liefern, das an den genannten Zugangspunkt (AP) angeschlossen ist, wobei das Verfahren die folgenden Schritte umfasst:
Einstellen in die Warteschlange (S1) von mehreren Datenpakten, wobei ein Datenpaket eine Wartezeit d hat, nach deren Ablauf es als verloren gilt;
Bestimmung (S2) der Übertragungszeit T_{d} der Datenpakete mit einer Wartezeit d für jeden Wartezeitwert d, wobei die genannte Übertragungszeit T_{d} von der notwendigen Dauer zum Aktivieren des Zugangspunks von einem inaktiven Modus aus oder im Standby abhängt;
Vergleich (S3) einer Übertragungszeit T_{d}, die der genannten Wartezeit d entspricht, für eine Wartezeit d,
wobei die vorherigen Schritte (S1, S2, S3) durch eine von dem Zugangspunkt (AP) in dem Fall, in dem der Zugangspunkt im inaktiven Modus ist, delokalisierte Vorrichtung realisiert wird,
wobei das Verfahren, wenn die Dauer d-Td negativ ist, einen Aktivierungsschritt (S4) genannten Zugangspunkts von dem inaktiven Modus oder dem Standby umfasst, um Pakete von der Warteschlange zu übertragen, wobei der Aktivierungsschritt (S4) des genannten Zugangspunktes in dem Fall, in dem der Zugangspunkt vor dem Aktivierungsschritt im inaktiven Modus ist, zu übertragen, die Übertragung eines Aktivierungssignals des genannten Zugangspunktes durch die delokalisierte Vorrichtung umfasst.

2. Verfahren gemäß dem voranstehenden Anspruch, bei dem der Zugangspunkt geeignet ist, um wenigstens ein Datenpakt während eines Übertragungsintervalls TTI zu übertragen, wobei die Übertragungszeit Td einer ganzen Übertragungsintervallzahl TTI zum Übertragen der Pakete entspricht, die eine Wartezeit d haben.

3. Verfahren gemäß Anspruch 2, bei dem in jedem Übertragungsintervall die Datenpakete auf mehreren Frequenzen übertragen werden können.

4. Verfahren gemäß einem der voranstehenden Ansprüche, bei dem die Übertragungszeit Td von der Qualität der Funkverbindung zwischen einem Kommunikationsterminal und dem Zugangspunkt abhängt.

5. Zugangspunkt eines Kommunikationsnetzes, das zur Ausgabe der Datenpakete an wenigstens ein Kommunikationsterminal (UE) geeignet ist, das an den genannten Zugangspunkt (AP) angeschlossen ist, wobei der Zugangspunkt darüber hinaus geeignet ist, um ein Verfahren gemäß einem der voranstehenden Ansprüche umzusetzen, wenn der genannte Zugangspunkt im Standby-Modus ist.

6. Kommunikationsnetz, umfassend wenigstens einen Zugangspunkt gemäß dem voranstehenden Anspruch und wenigstens ein Kommunikationsterminal (UE), das an den genannten Zugangspunkt angeschlossen ist.

7. Kommunikationsnetz gemäß dem voranstehenden Anspruch, bei dem der Zugangspunkt der eines Netzes 3GPP vom Typ Edge, 3G, 3G+, 4G, LTE oder eines Nicht-3GPP-Netzes vom Typ Wi-Fi, Wimax ist.

8. Computerprogrammprodukt, umfassend Code-Anweisungen für die Ausführung eines Verfahrens gemäß einem der Ansprüche 1 bis 4, wenn dieses durch einen Prozessor ausgeführt wird.

## Claims

1. Method for managing an access point of a communications network, the access point being capable of delivering data packets to at least one communications terminal (UE) connected to said access point (AP), where the method comprises the following steps:
queuing of several data packets (S1), where a data packet has a waiting time d at the end of which it is considered to be lost;
for each waiting time d, the determination (S2) of the transmission time T_{d} of the data packets which have a waiting time d, said transmission time T_{d} being a function of the time needed to activate the access point from an inactive or sleep mode;
for a waiting time d, the comparison (S3) of a corresponding transmission time T_{d} with said waiting time d,
The preceding steps (S1, S2, S3) are carried out by a device which is delocalised from the access point (AP) in the event that the access point is in inactive mode,
Said method comprising, if the duration d-Td is negative, a step (S4) of activating of said access point from the inactive or sleep mode in order to transmit packets from the queue, the activating step (S4) of said access point comprising, in the event of the access point being in the inactive mode before said activating step, the transmission by the delocalised device of an activation signal for the access point.

2. Method according to the preceding claim, wherein the access point is capable of transmitting at least one data packet during a transmission interval, TTI, where the transmission time Td corresponds to a whole number of transmission intervals TTI for transmitting the packets before a waiting time d.

3. Method according to claim 2 wherein in each transmission interval the data packets may be transmitted over several frequencies

4. Method according to one of the preceding claims, wherein the transmission time Td is a function of the quality of the radio link between a communications terminal and the access point.

5. Access point of a communications network which is capable of delivering data packets to at least one communications terminal (UE) connected to said access point (AP), the access point moreover being capable of implementing a method according to one of the preceding claims when said access point is in sleep mode.

6. Communications network comprising at least one access point according to the preceding claim and at least one communications terminal (UE) connected to said access point.

7. Communications network according to the preceding claim, wherein the access point is that of an 3GPP network of the Edge, 3G, 3G+, 4G, LTE type or a non-3GPP network of the Wi-Fi, Wimax type.

8. Computer programme product comprising code instructions for the execution of a method according to one of claims 1 to 4, when said method is executed by a processor.
